# FASCICULE DE BREVET EUROPEEN

(11) **EP 0 787 065 B1**
(45) Date de publication et mention de la délivrance du brevet: **04.11.1998**
(21) Numéro de dépôt: 94909174.8
(22) Date de dépôt: 11.03.1994
(51) Int. Cl.: B29C 47/06, B29C 47/04

(54) **PARAISON TUBULAIRE MULTI-COUCHES AINSI QUE PROCEDE ET APPAREIL POUR SA FABRICATION**
ROHRFÖRMIGER MEHRSCHICHTVORFORMLING UND VERFAHREN UND VORRICHTUNG ZU DESSEN HERSTELLUNG
TUBULAR MULTILAYER PREFORM AND METHOD AND DEVICE FOR THE MANUFACTURE THEREOF

(43) Date de publication de la demande: 06.08.1997
(73) Titulaire: Lefort, Olivier Simon, 70700 Cugney (FR)
(72) Inventeur: Lefort, Olivier Simon, 70700 Cugney (FR)
(74) Mandataire: Bruder, Michel
(86) Numéro de dépôt international: FR9400267
(87) Numéro de publication internationale: WO9524302

(56) Documents cités:
- EP-A- 0 298 908
- EP-A- 0 573 683
- DE-A- 2 508 919
- FR-A- 2 698 581
- GB-A- 1 370 281
- US-A- 3 825 036

## Description

La présente invention concerne une paraison tubulaire à plusieurs couches de matières thermoplastiques coaxiales selon le préambule de la revendication 1 ainsi qu'un procédé selon le préambule de la revendication 7 et un appareil de fabrication d'une telle paraison tubulaire selon le préambule de la revendication 9.

Les paraisons tubulaires à plusieurs couches sont notamment utilisées dans le domaine de l'extrusion-soufflage de matière thermoplastique pour la fabrication de corps creux destinés à contenir ou à véhiculer des produits liquides, pâteux, poudreux, solides ou gazeux, alimentaires ou non (produits chimiques, parachimiques, phytosanitaires, pétroliers etc...). Dans le procédé de fabrication de tels corps creux par extrusion-soufflage, on part de matières plastiques qui sont chauffées et mises sous pression par un ensemble vis/fourreau à une température précise correspondant à la technologie du polymère traité pour fournir, par l'intermédiaire d'une tête d'extrusion, une paraison tubulaire chaude. Cette paraison est prise ensuite entre deux demi-moules dont les empreintes correspondent à la forme externe du corps creux à souffler. On introduit ensuite une canne de soufflage, par le haut de la paraison, pour former l'intérieur du col du conteneur fabriqué et pour introduire de l'air sous pression dans la paraison de telle façon que la matière thermoplastique chaude, encore molle, s'étire sous l'action de la pression et prenne la forme de l'empreinte du moule qui, une fois refroidi à basse température, fige la matière plastique pour obtenir la forme définitive compte tenu des retraits obligatoires de la matière plastique. Les barres de matière se trouvant autour du corps creux obtenu par soufflage et qui résultent du pincement de la paraison par les demi-moules, sont retirées par un système mécanique, broyées puis réutilisées, de manière à obtenir le corps creux fini.

La paraison tubulaire utilisée au départ peut comporter une seule couche ou plusieurs couches superposées régulièrement avec éventuellement des adhésifs entre couches pour que ces couches tiennent bien entre elles.

On connaît déjà, par le brevet EP-A-0 298 908, un dispositif de co-extrusion permettant de fabriquer en continu une paraison tubulaire à plusieurs couches coaxiales utilisable ensuite pour le soufflage de corps creux à plusieurs couches. On connaît également, ainsi qu'il est décrit dans le brevet GB-A-1 370 281, un appareil d'extrusion de tuyaux flexibles en matière plastique renforcée comprenant un tube en une première matière plastique comportant des anneaux espacés axialement en une seconde matière plastique, ces anneaux étant partiellement ou totalement noyés dans la paroi du tube.

La présente invention concerne des perfectionnements apportés à la fabrication de paraisons tubulaires à plusieurs couches dans le but d'obtenir, après soufflage, des produits finis ayant une grande résistance mécanique, d'utiliser d'une manière optimale des déchets broyés, recyclés et d'adapter très aisément les propriétés d'une paraison tubulaire aux exigences d'une application particulière.

A cet effet cette paraison tubulaire à plusieurs couches de matières thermoplastiques coaxiales, comprenant au moins une structure à trois couches intérieure, médiane et extérieure, est caractérisée en ce que la couche médiane est constituée d'une alternance de premiers et seconds anneaux transversaux, constitués respectivement en des première et seconde matières thermoplastiques, et de joncs longitudinaux individuels en une troisième matière plastique, répartis autour de l'axe de la paraison, coupant les anneaux transversaux alternés de la couche médiane en délimitant, avec les premiers anneaux transversaux, des cellules constituées de la seconde matière thermoplastique et d'une dimension longitudinale supérieure à la dimension longitudinale des premiers anneaux transversaux.

L'invention a également pour objet un procédé de fabrication d'une paraison tubulaire à plusieurs couches de matières thermoplastiques coaxiales dans lequel on extrude successivement, les unes sur les autres, une couche intérieure, puis une couche médiane, puis une couche extérieure, caractérisé en ce que pour former la couche médiane on extrude successivement des premier et second anneaux transversaux alternés constitués respectivement d'une première matière thermoplastique et d'une seconde matière thermoplastique et on extrude ensuite, en plusieurs points répartis dans le sens circonférentiel autour de l'axe de la paraison, des joncs longitudinaux individuels en une troisième matière thermoplastique, coupant la couche médiane et éventuellement au moins une des couches intérieure et extérieure.

L'invention a aussi pour objet un appareil de fabrication, par coextrusion, d'une paraison tubulaire à plusieurs couches de matières thermoplastiques comprenant au moins une structure à trois couches intérieure, médiane et extérieure, cet appareil comportant une tête d'extrusion dans laquelle sont formés plusieurs canaux d'extrusion cylindriques coaxiaux et verticaux, à savoir un canal interne d'extrusion de la couche intérieure, un canal intermédiaire d'extrusion de la couche médiane et un canal externe d'extrusion de la couche extérieure, et un bloc d'alimentation alimentant les canaux en matières thermoplastiques, caractérisé en ce que le canal d'extrusion intermédiaire est relié en commun à des premier et second dispositifs, fonctionnant alternativement pour l'alimentation de première et seconde matières thermoplastiques respectives, chacun de ces premier et second dispositifs d'alimentation comportant une vis d'extrusion forçant la matière thermoplastique correspondante dans une chambre formant accumulateur de matière, à partir de laquelle elle est refoulée dans le canal d'extrusion de la couche médiane par un piston animé d'un mouvement alternatif, et au moins un ensemble de canaux indépendants répartis autour de l'axe de la tête d'extrusion, reliés en commun à un dispositif d'alimentation d'une troisième matière plastique, faisant partie du bloc d'alimentation, et débouchant en plusieurs points pour l'injection de joncs verticaux coupant la couche médiane.

On décrira ci-après, à titre d'exemples non limitatifs, diverses formes d'exécution de la présente invention, en référence aux dessins annexés sur lesquels :
- la figure 1 est un schéma illustrant la fabrication d'une paraison tubulaire à plusieurs couches suivant l'invention.
- la figure 2 est une vue en perspective, partiellement en coupe, d'une paraison tubulaire suivant l'invention.
- la figure 3 est une vue en coupe axiale faite suivant la ligne III-III de la figure 2.
- la figure 4 est une vue en coupe axiale faite suivant la ligne IV-IV de la figure 2.
- la figure 5 est une vue en coupe transversale faite suivant la ligne V-V de la figure 4.
- les figures 6, 7, 8 et 9 sont des vues en coupe transversale partielle de la paroi de la paraison tubulaire illustrant différentes dispositions d'un jonc longitudinal de la couche médiane.
- la figure 10 est une vue en coupe longitudinale d'une variante de réalisation de la paroi de la paraison tubulaire.
- la figure 11 est une vue en coupe transversale d'une autre variante d'exécution de la paraison tubulaire.
- la figure 12 est une vue en coupe axiale d'une paraison tubulaire prévue pour une application particulière au soufflage d'un corps creux.
- la figure 13 est une vue en coupe axiale simplifiée d'une tête d'extrusion utilisée pour la fabrication d'une paraison tubulaire suivant l'invention.
- la figure 14 est une vue en coupe schématique du bloc d'alimentation de la tête d'extrusion, faite suivant la ligne XIV-XIV de la figure 15.
- la figure 15 est une vue en coupe du bloc d'alimentation faite suivant la ligne XV-XV de la figure 14.

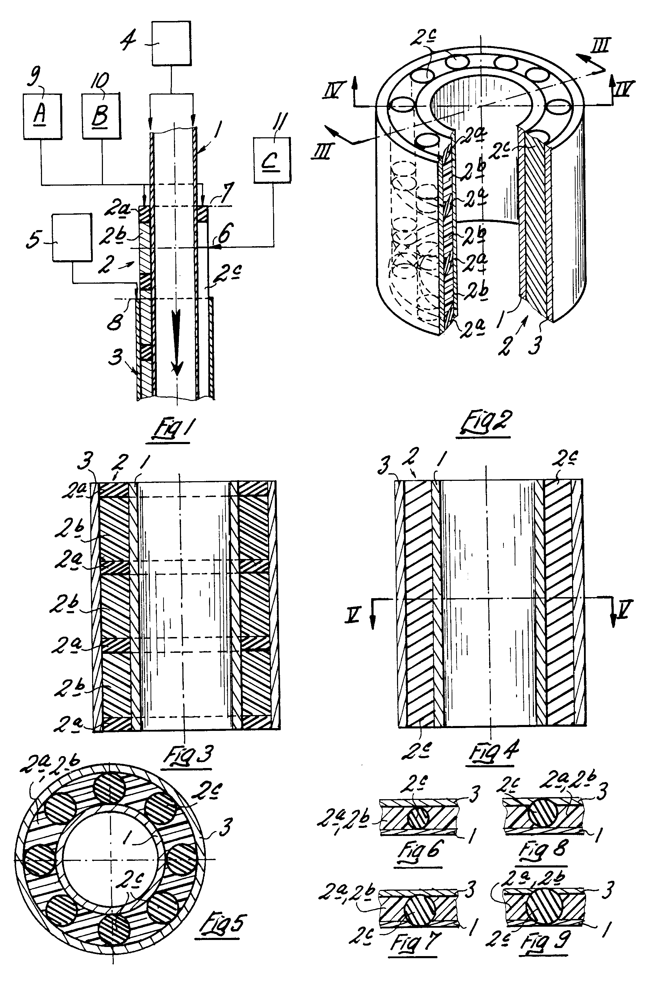

Sur la figure 1 est représenté schématiquement le procédé de fabrication d'une paraison tubulaire à plusieurs couches coaxiales, suivant l'invention. La paraison est essentiellement constituée d'une couche intérieure 1, d'une couche médiane 2 et d'une couche extérieure 3 qui sont formées successivement les unes sur les autres, dans cet ordre, par un procédé d'extrusion de couches multiples coaxiales. Les couches intérieure 1 et extérieure 3 sont constituées chacune en une matière thermoplastique vierge mélangée, avec ou sans broyé, les matières de ces deux couches pouvant être les mêmes ou différentes. Les couches de matière thermoplastique sont formées dans une tête d'extrusion qui sera décrite plus loin en référence à la figure 13 et leurs matières thermoplastiques constitutives sont fournies par des dispositifs d'alimentation respectifs 4 et 5 qui seront décrits d'une façon plus détaillée plus loin en référence aux figures 14 et 15.

Suivant l'invention la couche médiane 2 est constituée d'une alternance d'anneaux transversaux et horizontaux 2a et 2b, de longueurs ou dimensions longitudinales différentes, constitués respectivement de matières plastiques A et B différentes, se succédant dans le sens longitudinal, et de joncs verticaux 2c, c'est-à-dire longitudinaux, réalisés en une troisième matière plastique C. Ces joncs 2c sont extrudés, de manière à couper les anneaux transversaux alternés 2a, 2b, dans une zone d'extrusion 6 qui est située en aval de la zone 7 d'extrusion des anneaux transversaux alternés 2a, 2b et en amont de la zone 8 d'extrusion de la couche extérieure 3. Les matières thermoplastiques A et B, constituant respectivement les anneaux transversaux alternés 2a et 2b, sont fournies à la zone d'extrusion 7 par des dispositifs d'alimentation 9, 10 fonctionnant alternativement, alors que la troisième matière plastique C, constituant les joncs longitudinaux et verticaux 2c, est fournie à la zone d'extrusion 6 par un dispositif d'alimentation indépendant 11.

A la sortie de la tête d'extrusion la paraison tubulaire suivant l'invention présente donc une structure telle qu'illustrée d'une façon plus détaillée sur les figures 2 à 5. Cette paraison a une section transversale circulaire mais elle pourrait aussi bien avoir n'importe quelle autre forme désirée telle qu'ovale, carrée, rectangulaire etc... Comme on peut le voir sur les figures 2 à 5, les anneaux transversaux ou anneaux de niveau 2a ont une dimension longitudinale beaucoup plus petite que celle des anneaux transversaux 2b et tous les anneaux 2a, 2b sont coupés par les joncs longitudinaux 2c qui délimitent ainsi, entre les portions des anneaux de niveau 2a en matière thermoplastique A, des portions d'anneaux 2b constituant des "cellules" en matière thermoplastique B.

La matière thermoplastique A constituant les anneaux transversaux de niveau 2a est une matière vierge, avec ou sans broyé, adhérant aux couches intérieure 1 et extérieure 3.

La matière plastique C des joncs verticaux 2c est également une matière vierge, avec ou sans broyé, adhérant aux couches intérieure 1 et extérieure 3.

Les joncs verticaux 2c peuvent être continus dans un tronçon donné de la paraison ou bien encore ils peuvent être interrompus dans des zones précises de cette paraison.

Les joncs verticaux 2c peuvent avoir un diamètre égal ou légèrement supérieur à l'épaisseur de la couche médiane 2 de manière à être sensiblement tangents intérieurement aux couches intérieure 1 et extérieure 3, comme il est représenté sur la figure 6. Ils peuvent également avoir un diamètre supérieur à l'épaisseur de la couche médiane 2 et dans ce cas ils peuvent être soit sensiblement tangents intérieurement à la couche extérieure 3 et couper la couche intérieure 1, comme il est représenté sur la figure 7, soit tangents intérieurement à la couche intérieure 1 et couper la couche extérieure 3, comme il est représenté sur la figure 8, soit encore ils peuvent couper à la fois les couches intérieure 1 et extérieure 3 comme il est représenté sur la figure 9. Le nombre des cellules 2b est déterminé par le nombre de joncs verticaux 2c et le nombre d'anneaux transversaux de niveau 2a. La densité des cellules 2b varie en fonction de la structure désirée pour chaque paraison ou par paraison.

La répartition des joncs verticaux 2c n'est pas forcément régulière tout autour de la paraison autrement dit la distance, dans le sens circonférentiel, entre les joncs successifs peut être constante ou variable. De même la répartition des anneaux transversaux de niveau 2a peut être régulière ou non sur toute la longueur de la paraison, la distance entre les différents anneaux 2a pouvant être constante ou variable.

Suivant une variante la seconde matière thermoplastique constituant les cellules 2b, peut avoir une composition B1, B2... qui est différente d'une cellule 2b à la suivante, dans le sens longitudinal, par exemple pour obtenir des zones plus ou moins dures ou plus ou moins molles. Ces matières thermoplastiques différentes B1, B2... sont alors fournies par des dispositifs d'alimentation indépendants, analogues au dispositif 10, mis en service d'une manière sélective pour fournir les matières thermoplastiques désirées B1, B2... dans la zone d'extrusion 7.

Les joncs verticaux 2c peuvent avoir de préférence une forme cylindrique ou toute autre forme.

Les matières constituant la couche intérieure 1, la couche extérieure 3 et les anneaux transversaux 2a peuvent être les mêmes ou bien encore des matières différentes mais qui présentent une caractéristique d'adhérence entre elles soit naturellement, soit par adjonction d'adhésifs. Ces couches sont constituées d'une matière vierge ou d'un mélange homogène de matières vierges, de broyé (déchets provenant du fonctionnement) et d'additifs (adhésif, liant, stabilisant, colorant, parfum etc...).

La matière B constituant les cellules 2b peut être l'une quelconque des matières thermoplastiques extrudables telles que PEBD Polyéthylène basse densité, PEHD Polyéthylène haute densité, THPM Polyéthylène à très haut poids moléculaire, PP Polypropylène, PVC Polychlorure de vinyle, PET Poly térephtalate d'éthylène, PA Polyamide, EVA Poly éthylène/acétate de vinyle, EVOH Copolymère éthylène/alcool vinylique, etc.... . Elle peut comporter des déchets extrudables régénérés sous forme de granulés ou de poudre et des charges extrudables minérales ou non (craie, fibre de verre, fibre végétale, sciure de bois etc...).

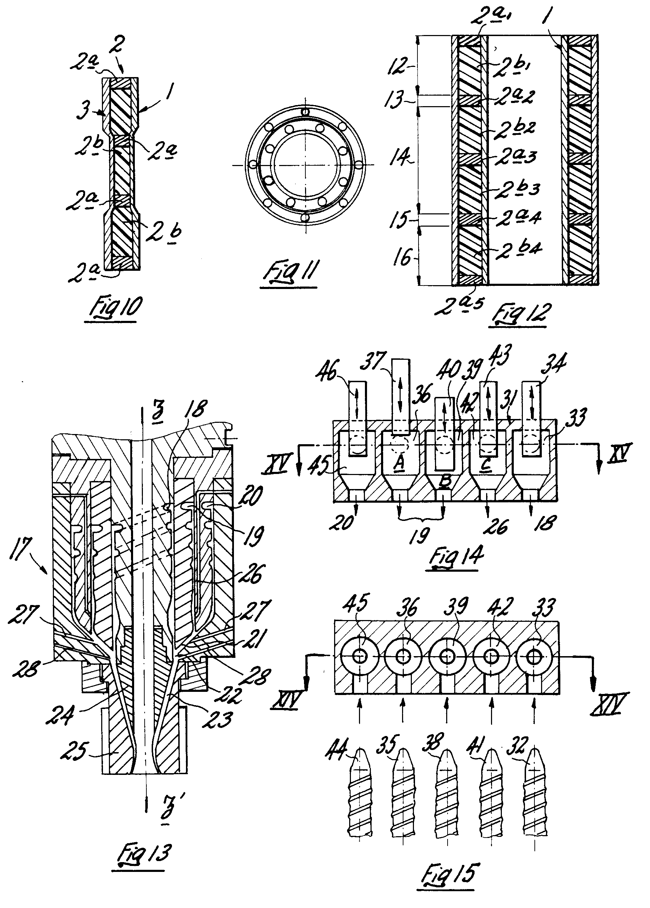

L'épaisseur des couches 1, 2, 3 de la paraison peut être constante ou variable suivant la longueur de la paraison. La figure 10 illustre un exemple de réalisation dans lequel les épaisseurs des couches 1, 2, 3 de la paraison sont plus faibles dans la partie centrale intermédiaire de cette paraison que dans ses parties extrêmes.

Suivant une variante d'exécution, ainsi qu'il est représenté sur la figure 11, la paraison tubulaire est constituée de plusieurs paraisons tubulaires élémentaires coaxiales, logées les unes dans les autres, réalisées indépendamment et successivement de la manière décrite précédemment.

La paraison suivant l'invention permet de fabriquer des produits finis extrudés et extrudés-soufflés tels que flacons, bouteilles, bidons, jerricans, ainsi que tous les corps creux extrudables-soufflables tels que réservoirs d'essence, réservoirs hydrauliques pour frein, pour lave-glace, à expansion etc.... . Elle peut aussi être utilisée pour la fabrication de films de palétisation multi-couches, de durites, tubes et tuyaux, de parois de meubles, d'un capotage de matériel informatique (bureautique) et de toute pièce extrudable et extrudable-soufflable. Le produit fini obtenu à partir de la paraison tubulaire suivant l'invention offre une meilleure résistance mécanique à la compression, à la chute, aux chocs et aux vibrations.

On donnera maintenant, en se référant à la figure 12, un exemple d'application industrielle d'une paraison tubulaire suivant l'invention à la fabrication de récipients à poignée ou sans poignée d'une contenance allant de 50 ml à 500 litres. La zone extrême supérieure 12 de la paraison tubulaire représente les déchets hauts, la zone suivante 13, située immédiatement en dessous, représente le goulot et le col du récipient devant être fabriqué, avec ou sans la poignée, la zone inférieure suivante 14 représente le corps du récipient, la zone 15 le fond et la zone 16 les déchets bas. La paraison présente, de haut en bas, une alternance d'anneaux de niveaux 2a et de cellules 2b, indiqués successivement par les références 2a₁, 2b₁, 2a₂, 2b₂, 2a₃, 2b₃, 2a₄, 2b₄, 2a₅. Les cellules 2b₁ et 2b₄ des niveaux supérieur et inférieur sont composées à partir d'un mélange de matière vierge et de broyé, c'est-à-dire de déchets provenant du fonctionnement de l'extrusion-soufflage, avec le pincement par les moules de la paraison en haut et en bas, et de la découpe de la poignée. Les cellules 2b₂ et 2b₃ des deux niveaux intermédiaires sont composées à partir de charges (craie, déchets extrudables régénérés etc...). Cette répartition permet d'assurer, dans les zones 12, 13, 15 et 16, des soudures parfaites, de ne pas polluer le broyé et d'abaisser le prix de revient en utilisant des charges à plus bas prix que la matière vierge, tout en améliorant les caractéristiques mécaniques des produits à fabriquer grâce à la structure à cellules multiples. Les anneaux de niveau 2a₁, 2a₂, 2a₃, 2a₄, 2a₅ sont composés à partir d'un mélange de matière vierge et de broyé.

Un autre exemple d'application industrielle est constitué par la fabrication de bouteilles de boissons gazeuses transparentes en PET. On peut utiliser une paraison suivant l'invention en prévoyant la disposition des cellules 2b composées de matières recyclées de couleur en général foncée, donc non transparente, au niveau de l'étiquette du produit, de façon à cacher cette partie non transparente, en laissant le reste de la bouteille transparente, ce qui permet de voir le produit contenu tout en utilisant des matières recyclées.

Dans une autre application industrielle on peut avoir, dans des zones différentes de la pièce fabriquée, une rigidité variable, c'est-à-dire des zones plus ou moins dures B1, B2 .... ou plus ou moins molles, en utilisant des matières plus ou moins dures dans les différentes cellules 2b. Dans ce cas il faut utiliser un dispositif d'alimentation distinct par matière différente.

Comme autre application industrielle on peut citer la fabrication de réservoirs à soudure complète ou pratiquement complète sur le pourtour d'un réservoir destiné à contenir un carburant pour automobile. On peut alors disposer certains des joncs verticaux 2c de telle façon qu'ils correspondent avec une largeur judicieuse à l'emplacement des soudures verticales du réservoir à souffler. On assure ainsi des soudures parfaites tout en pouvant remplir toutes les autres cellules 2b de charges ou de déchets extrudables régénérés. Pour les réservoirs qui ne comportent des soudures que sur les parties supérieure et inférieure de leurs paraisons on peut procéder comme dans le cas de l'exemple décrit en référence à la figure 2.

On décrira maintenant, en se référant aux figures 13 à 15, un appareil permettant de fabriquer, par coextrusion, la paraison tubulaire à couches multiples suivant l'invention. Cet appareil comporte une tête d'extrusion 17, représentée sur la figure 13, qui est réalisée, pour sa plus grande part, d'une manière traditionnelle. Cette tête 17, d'axe vertical ZZ' comporte plusieurs pièces cylindriques coaxiales, emboîtées étroitement les unes dans les autres et définissant, de l'intérieur vers l'extérieur, plusieurs canaux d'extrusion cylindriques coaxiaux, verticaux, à savoir un canal interne 18 d'extrusion de la couche intérieure 1, un canal intermédiaire 19 d'extrusion des anneaux alternés 2a, 2b de la couche médiane 2 et un canal externe 20 d'extrusion de la couche extérieure 3. Les canaux 19 et 20 se rejoignent à leurs extrémités inférieures et ils sont prolongés par un canal tronconique 21, convergeant vers le bas, rejoignant, à son extrémité inférieure le canal central 18. Les deux canaux 18, 21 sont ensuite prolongés par un court canal vertical 22 puis un canal tronconique 23 convergeant vers le bas, délimité par un noyau d'extrusion interne 24 et une buse externe 25. La tête d'extrusion comporte en outre plusieurs canaux pour l'injection des joncs verticaux 2c coupant la couche médiane 2. Plusieurs premiers canaux verticaux indépendants 26, situés entre les canaux intermédiaire 19 et externe 20, débouchent, à leurs extrémités inférieures, dans le canal intermédiaire 19, en plusieurs points répartis autour de l'axe vertical 33' de la tête 17, pour l'injection des joncs longitudinaux respectifs 2c coupant la couche médiane 2. Plusieurs seconds canaux inclinés indépendants 27 débouchent dans le canal de jonction tronconique 21 pour l'injection de joncs longitudinaux coupant la couche extérieure 3 et la couche médiane 2. Enfin plusieurs troisièmes canaux inclinés indépendants 28 débouchent dans le court canal cylindrique vertical 22 pour l'extrusion de joncs coupant la totalité des trois couches 1, 2, 3 de la paraison.

Les figures 14 et 15 représentent une forme d'exécution d'un bloc d'alimentation 31 de la tête d'extrusion 17. Les matières thermoplastiques sont alimentées par des vis d'extrusion qui les font pénétrer éventuellement dans des accumulateurs de matière à partir desquels elles sont refoulées, à travers des vannes de régulation de débit, au moyen de pistons. Dans le cas particulier de la formation de la couche intérieure 1 et de la couche extérieure 3, le canal d'extrusion correspondant peut être alimenté soit directement soit par l'intermédiaire d'un accumulateur de matière. Le bloc d'alimentation 31 comprend, dans cette forme d'exécution non limitative, cinq dispositifs d'alimentation individuels correspondant aux diverses matières extrudées.

La matière extrudée destinée à constituer la couche intérieure 1 est forcée, par une vis d'extrusion 32, dans une chambre 33 formant accumulateur de matière, à partir de laquelle cette matière est refoulée, par un piston 34 animé d'un mouvement alternatif, dans le canal central 18 d'extrusion de la couche intérieure 1. Toutefois, suivant une variante, la vis d'extrusion 32 pourrait refouler directement la matière de la couche intérieure 1 dans le canal 18.

La matière thermoplastique A, constituant les anneaux de niveau 2a, est forcée, par une vis d'extrusion 35 dans une chambre 36 formant accumulateur de matière, à partir de laquelle elle est refoulée par un piston 37, animé d'un mouvement alternatif, vers le canal d'extrusion 19. De même la seconde matière thermoplastique B, constituant les cellules 2b, est forcée par une vis d'extrusion 38 dans une chambre 39 formant accumulateur de matière, à partir de laquelle elle est refoulée dans le canal d'extrusion 19 par l'intermédiaire d'un piston 40, animé d'un mouvement alternatif. La matière thermoplastique C, constituant les joncs 2c, est forcée, par une vis d'extrusion 41, dans une chambre 42 formant accumulateur de matière, à partir de laquelle elle est refoulée, par un piston mobile 43 dans le canal d'extrusion 26. Ce dispositif d'alimentation permet d'interrompre à volonté, dans une même paraison, les joncs longitudinaux 2c, à des endroits appropriés.

Enfin la matière thermoplastique constituant la couche extérieure 3 est forcée, par une vis d'extrusion 44, dans une chambre 45 formant accumulateur de matière, à partir de laquelle elle est refoulée, par un piston mobile 46, dans le canal d'extrusion 20. Toutefois, suivant une variante, cette matière pourrait être refoulée directement par la vis d'extrusion 44 dans le canal 20.

Comme il a été indiqué précédemment l'extrusion des matières thermoplastiques A et B, constituant respectivement les anneaux de niveau 2a et les cellules 2b, sont extrudées alternativement, autrement dit les dispositifs d'alimentation de ces matières fonctionnent alternativement, ce fonctionnement alternatif étant déterminé par une commande électronique. Autrement dit, pendant que l'une des matières thermoplastiques est accumulée, par exemple la matière A accumulée dans la chambre 36 par la vis d'extrusion 35 entraînée en rotation, le piston 37 étant alors maintenu immobile en position haute, l'autre matière thermoplastique B est refoulée progressivement dans le canal d'extrusion 19 par suite du mouvement du piston 40 vers le bas dans la chambre 39. Une fois l'extrusion de la matière B terminée, le piston 40 est remonté, la vis d'extrusion 38 est entraînée en rotation pour accumuler de nouveau la matière B dans la chambre 39 et pendant ce temps la vis d'extrusion 35 est arrêtée et le piston 37 est déplacé vers le bas pour refouler, dans le canal d'extrusion 19, la matière thermoplastique A immédiatement à la suite de la matière B précédemment extrudée.

Suivant une variante de réalisation certaines vis d'extrusion pourraient être utilisées conjointement pour plusieurs couches constituées d'une même matière thermoplastique (par exemple pour les couches intérieure 1 et extérieure 3).

## Revendications

1. Paraison tubulaire à plusieurs couches de matières thermoplastiques coaxiales, comprenant au moins une structure à trois couches intérieure (1), médiane (2) et extérieure (3), la couche médiane (2) étant constituée d'une alternance de premiers et seconds anneaux transversaux (2a,2b), constitués respectivement en des première et seconde matières thermoplastiques (A,B), caractérisée en ce que des joncs longitudinaux individuels (2c) en une troisième matière plastique (C) sont répartis autour de l'axe de la paraison, coupant les anneaux transversaux alternés (2a,2b) de la couche médiane (2) en délimitant, avec les premiers anneaux transversaux (2a), des cellules (2b) constituées de la seconde matière thermoplastique (B) et d'une dimension longitudinale supérieure à la dimension longitudinale des premiers anneaux transversaux (2a).

2. Paraison tubulaire suivant la revendication 1 caractérisée en ce que les joncs longitudinaux (2c) ont une épaisseur sensiblement égale à celle de la couche médiane (2) et ils sont sensiblement tangents intérieurement aux couches intérieure (1) et extérieure (3).

3. Paraison tubulaire suivant la revendication 1 caractérisée en ce que les joncs longitudinaux (2c) ont une épaisseur supérieure à celle de la couche médiane (2) et ils coupent au moins l'une des couches intérieure (1) et extérieure (3).

4. Paraison tubulaire suivant l'une quelconque des revendications précédentes caractérisée en ce que les trois couches intérieure (1), médiane (2) et extérieure (3) ont des épaisseurs variables dans le sens longitudinal.

5. Paraison tubulaire suivant l'une quelconque des revendications précédentes caractérisée en ce que la seconde matière thermoplastique constituant les cellules (2b) de la couche médiane (2) a une composition (B1,B2) qui est différente d'une cellule (2b) à la cellule suivante, dans le sens longitudinal.

6. Paraison tubulaire suivant l'une quelconque des revendications précédentes caractérisée en ce que les joncs longitudinaux (2c) sont interrompus dans une même paraison.

7. Procédé de fabrication d'une paraison tubulaire à plusieurs couches de matières thermoplastiques coaxiales dans lequel on extrude successivement, les unes sur les autres, une couche intérieure (1), puis une couche médiane (2), puis une couche extérieure (3), tel que pour former la couche médiane (2) on extrude successivement des premier et second anneaux transversaux alternés (2a,2b) constitués respectivement d'une première matière thermoplastique (A) et d'une seconde matière thermoplastique (B), caractérisé en ce qu'on extrude ensuite, en plusieurs points répartis dans le sens circonférentiel autour de l'axe de la paraison, des joncs longitudinaux individuels (2c) en une troisième matière thermoplastique (C), coupant la couche médiane (2) et éventuellement au moins une des couches intérieure (1) et extérieure (3).

8. Procédé suivant la revendication 7 caractérisé en ce que les matières thermoplastiques constituant la couche intérieure (1), la couche extérieure (3), la première matière plastique (A) et la troisième matière plastique (C) sont les mêmes ou elles ont une propriété d'adhérence entre elles soit naturellement soit par adjonction d'adhésifs.

9. Appareil de fabrication, par coextrusion, d'une paraison tubulaire à plusieurs couches de matières thermoplastiques comprenant au moins une structure à trois couches intérieure (1), médiane (2) et extérieure (3), cet appareil comportant une tête d'extrusion (17) dans laquelle sont formés plusieurs canaux d'extrusion cylindriques coaxiaux et verticaux, à savoir un canal interne (18) d'extrusion de la couche intérieure (1), un canal intermédiaire (19) d'extrusion de la couche médiane (2) et un canal externe (20) d'extrusion de la couche extérieure (3), et un bloc d'alimentation (31) alimentant les canaux (18,19,20) en matières thermoplastiques, tel que le canal d'extrusion intermédiaire (19) est relié en commun à des premier et second dispositifs, fonctionnant alternativement pour l'alimentation de première et seconde matières thermoplastiques respectives (A,B), caractérisé en ce que chacun de ces premier et second dispositifs d'alimentation comportant une vis d'extrusion (35,38) forçant la matière thermoplastique correspondante (A,B) dans une chambre (36,39) formant accumulateur de matière, à partir de laquelle elle est refoulée dans le canal (19) d'extrusion de la couche médiane (2) par un piston (37,40) animé d'un mouvement alternatif, et au moins un ensemble de canaux indépendants (26,27,28) répartis autour de l'axe (ZZ') de la tête d'extrusion (17), reliés en commun à un dispositif (41,42,43) d'alimentation d'une troisième matière plastique (C), faisant partie du bloc d'alimentation (31), et débouchant en plusieurs points pour l'injection de joncs verticaux (2c) coupant la couche médiane (2).

## Claims

1. Tubular parison made of several layers of coaxial thermoplastic materials, comprising at least one structure of three layers, interior (1), median (2), and exterior (3), characterised in that the median layer (2) comprises an alternating sequence of first and second transverse rings (2a, 2b), consisting respectively of these first and second thermoplastic materials (A, B) and of individual longitudinal retaining rings (2c) around the axis of the parison and a third plastic material (C) distributed around the axis of the parison, intersecting the alternating transverse rings (2a, 2b) of the median layer (2), dellmiting, with the first transverse rings (2a) a number of cells (2b) formed of the second thermoplastic material (B) and of a longitudinal dimension greater than the longitudinal dimension of the first transverse rings (2a).

2. Tubular parison according to Claim 1, characterised in that the longitudinal retaining rings (2c) have a thickness which is approximately equal to that of the median layer (2) and that they approximately form tangents within the interior (1) and exterior (3) layers.

3. Tubular parison according to Claim 1, characterised in that the longitudinal retaining rings (2c) have a thickness greater than that of the median layer (2) and that they intersect at least one of the interior (1) and exterior (3) layers.

4. Tubular parison according to any of the preceding Claims, characterised in that the three layers, interior (1), median (2), and exterior (3) have variable thicknesses in the longitudinal direction.

5. Tubular parison according to any of the preceding Claims, characterised in that the second thermoplastic material comprises cells (2b) of the median layer (2) of a composition (B1, B2) which differs from one cell (2b) to the following cell, in the longitudinal direction.

6. Tubular parison according to any of the preceding Claims, characterised in that the longitudinal retaining rings (2c) are interrupted in the same parison.

7. Process for the manufacture of a tubular parison of several layers of coaxial thermoplastic materials, in which there are extruded in succession, one on top of the other, an interior (1) layer, then a median (2) layer, and then an exterior (3) layer, characterised in that, in order to form the median (2) layer the first and second alternating transverse rings (2a, 2b) are extended in succession, and consist of a first thermoplastic material (A) and a second thermoplastic material (B), and that a number of individual longitudinal retaining rings (2c) are then extruded, distributed at several points about the axis of the parison, and a third thermoplastic material (C), intersecting the median (2) layer, and possibly at least one of the interior (1) and exterior (3) layers.

8. Process according to Claim 7, characterised in that the thermoplastic materials constituting the interior (1) layer, the exterior (3) layer, the first plastic layer (A), and the third plastic material (C), are the same, or that they have an adherence property between themselves which is either natural or provided by the addition of adhesives.

9. A device for manufacturing, by co-extrusion, a tubular parison of several layers of thermoplastic materials, comprising at least one structure of three layers, interior (1), median (2), and exterior (3), in which are formed several cylindrical extrusion channels, co-axial and vertical, being an internal (18) extrusion channel of the interior layer (1), an intermediary (19) extrusion channel of the median (2) layer, and an external (20) channel of the exterior (3) layer, and a feeding block (31) feeding the channels (18,19,20), made of thermoplastic materials, characterised in that the intermediary extrusion channel (19) is connected in common to first and second devices, functioning alternately for feeding the first and second thermoplastic materials respectively (A,B), each of these first and second feeding devices comprising an extrusion screw (35, 38) forcing the corresponding thermoplastic material (A,B) into a chamber (36, 39) forming a material accumulator, from which it is forced back into the extrusion channel (19) of the median (2) layer by a piston (37, 40), actuated by an alternative movement mechanism, and at least one assembly of independent channels (26,27,28) distributed about the axis (ZZ') of the extrusion head (17), connected in common to a feeding device (41,42,43) of a third plastic material (C), forming part of the feeding block (31), and opening at several points for the injection of vertical retaining rings (2c) intersecting the median (2) layer.

## Patentansprüche

1. Röhrenförmiger Vorformling mit mehreren koaxialen Schichten von Thermoplasten, umfassend mindestens einen Aufbau mit drei Schichten, einer inneren (1), einer mittleren (2) und einer äußeren (3), wobei die mittlere Schicht (2) von einer abwechselnden Folge von ersten und zweiten querverlaufenden Ringen (2a,2b) gebildet wird, die jeweils aus einem ersten und zweiten Thermoplasten (A,B) bestehen, dadurch gekennzeichnet, daß einzelne Längsstäbe (2c) aus einem dritten Kunststoff (C) die abwechselnden querverlaufenden Ringe (2a,2b) der mittleren Schicht (2) schneidend um die Achse des Vorformlings herum verteilt sind, wobei sie mit den ersten querverlaufenden Ringen (2a) Zellen (2b) begrenzen, die aus dem zweiten Thermoplasten (B) bestehen und von einer Längsabmessung sind, die großer ist als die Längsabmessung der ersten querverlaufenden Ringe (2a).

2. Röhrenförmiger Vorformling nach Anspruch 1, dadurch gekennzeichnet, daß die Längsstäbe (2c) eine Dicke aufweisen, die im Wesentlichen gleich derjenigen der mittleren Schicht (2) ist, und daß sie die innere (1) und äußere (3) Schicht im Wesentlichen innerlich tangieren.

3. Röhrenförmiger Vorformling nach Anspruch 1, dadurch gekennzeichnet, daß die Langsstäbe (2c) eine Dicke aufweisen, die größer ist als diejenige der mittleren Schicht (2), und daß sie mindestens eine der inneren (1) und äußeren (3) schichten schneiden.

4. Röhrenförmiger Vorformling nach einem beliebigen der vorangehenden Ansprüche, dadurch gekennzeichnet, daß die drei schichten, die innere (1), mittlere (2) und äußere (3), in Längsrichtung veränderliche Dicken aufweisen.

5. Röhrenförmiger Vorformling nach einem beliebigen der vorangehenden Ansprüche, dadurch gekennzeichnet, daß der die Zellen (2b) der mittleren Schicht (2) bildende zweite Thermoplast eine Zusammensetzung (B1,B2) aufweist, die sich in Längsrichtung von einer Zelle (2b) zur nächsten Zelle unterscheidet.

6. Röhrenförmiger Vorformling nach einem beliebigen der vorangehenden Ansprüche, dadurch gekennzeichnet, daß die Längsstäbe (2c) in ein und demselben Vorformling unterbrochen sind.

7. Verfahren zur Herstellung eines röhrenförmigen Vorformlings mit mehreren koaxialen schichten von Thermoplasten, bei dem man nacheinander eine innere Schicht (1), dann eine mittlere Schicht (2), dann eine äußere Schicht (3) übereinander extrudiert, derart, daß man zur Bildung der mittleren Schicht (2) nacheinander erste und zweite abwechselnde querverlaufende Ringe (2a,2b) extrudiert, die aus einem ersten Thermoplasten (A) bzw. einem zweiten Thermoplasten (B) bestehen, dadurch gekennzeichnet, daß man dann an mehreren, in Umfangsrichtung um die Achse des Vorformlings herum verteilten Stellen einzelne Langsstäbe (2c) aus einem dritten Thermoplasten (C) extrudiert, welche die mittlere Schicht (2) und gegebenenfalls mindestens eine der inneren (1) und äußeren (3) Schichten schneiden.

8. Verfahren nach Anspruch 7, dadurch gekennzeichnet, daß die Thermoplasten, welche die innere Schicht (1), die äußere Schicht (3), den ersten Kunststoff (A) und den dritten Kunststoff (C) bilden, dieselben sind, oder daß sie untereinander eine Hafteigenschaft aufweisen, entweder natürlicherweise oder durch Zugabe von Haftmitteln.

9. Vorrichtung zur Herstellung eines röhrenförmigen Vorformlings mit mehreren koaxialen Schichten von Thermoplasten, umfassend mindestens einen Aufbau mit drei Schichten, einer inneren (1), einer mittleren (2) und einer äußeren (3), durch Coextrusion, wobei diese Vorrichtung einen Extrusionskopf (17) aufweist, in dem mehrere koaxiale und vertikale zylindrische Extrusionskanäle ausgebildet sind, nämlich ein innerer Kanal (18) für die Extrusion der inneren Schicht (1), ein Zwischenkanal (19) für die Extrusion der mittleren Schicht (2) und ein äußerer Kanal (20) für die Extrusion der äußeren Schicht (3), und ein Versorgungsteil (31), das die Kanäle (18,19,20) mit Thermoplasten versorgt, derart, daß der Zwischenextrusionskanal (19) mit einer ersten und zweiten Vorrichtung zusammengeschaltet ist, die zur Versorgung mit einem ersten bzw. zweiten Thermoplasten (A,B) abwechselnd arbeiten, dadurch gekennzeichnet, daß jede dieser ersten und zweiten Versorgungsvorrichtungen eine Extrusionsschnecke (35,38) aufweisen, die den entsprechenden Thermoplasten (A,B) in eine einen Materialspeicher bildende Kammer (36,39) drückt, aus der er durch einen Kolben (37,40), der zu einer Hin- und Herbewegung angeregt wird, in den Kanal (19) für die Extrusion der mittleren Schicht (2) zurückgedrückt wird, sowie mindestens eine Gruppe von unabhängigen Kanälen (26,27,28), die um die Achse (ZZ') des Extrusionskopfs (17) herum verteilt sind, mit einer Versorgungsvorrichtung (41,42,43) für einen dritten Kunststoff (C) zusammengeschaltet sind, die einen Teil des Versorgungsteils (31) bildet, und an mehreren Stellen münden, zum Einspritzen von vertikalen Stäben (2c), welche die mittlere Schicht (2) schneiden.
